# EUROPÄISCHE PATENTSCHRIFT

(11) **EP 3 289 670 B1**
(45) Veröffentlichungstag und Bekanntmachung des Hinweises auf die Patenterteilung: **30.10.2019**
(21) Anmeldenummer: 16707390.7
(22) Anmeldetag: 02.03.2016
(51) Int. Cl.: H02K 7/102, H02K 7/116, H02K 5/15, F16D 65/18, F16D 121/22

(54) **GETRIEBESYSTEM**
TRANSMISSION SYSTEM
SYSTÈME DE TRANSMISSION

(30) Priorität: 28.04.2015 DE 102015005360
(43) Veröffentlichungstag der Anmeldung: 07.03.2018
(73) Patentinhaber: SEW-EURODRIVE GmbH & Co. KG, 76646 Bruchsal (DE)
(72) Erfinder: TRIEBSWETTER, Andreas, 76646 Bruchsal (DE); FREY, Marc, 75175 Pforzheim (DE)
(86) Internationale Anmeldenummer: PCT/EP2016/000358
(87) Internationale Veröffentlichungsnummer: WO 2016/173687

(56) Entgegenhaltungen:
- EP-B1- 0 925 631
- DE-A1- 10 314 697
- DE-A1-102008 028 604

## Beschreibung

Die Erfindung betrifft ein Getriebesystem.

Es ist allgemein bekannt, dass ein Elektromotor als Bremsmotor ausführbar ist.

Aus der DE 10 2008 028 604 A1 ist als nächstliegender Stand der Technik ein Elektromotor mit elektromagnetisch betätigbarer Bremse bekannt.

Aus der EP 0 925 631 B1 ist ein Adaptersystem bekannt.

Aus der DE 103 14 697 A1 ist eine Antriebsvorrichtung mit einer Antriebseinheit in explosionsgeschützter Ausführung bekannt.

Der Erfindung liegt daher die Aufgabe zugrunde, ein Getriebesystem weiterzubilden, wobei eine möglichst kompakte Ausführung erreicht werden soll.

Erfindungsgemäß wird die Aufgabe bei dem Getriebesystem nach den in Anspruch 1 angegebenen Merkmalen gelöst.

Wichtige Merkmale der Erfindung bei dem Getriebesystem sind, dass es ein Getriebe und eine elektromagnetisch betätigbare Bremse aufweist,
wobei die Bremse einen Spulenkern aufweist, der mit einem Bremsflächenteil drehfest verbunden ist,
wobei das Bremsflächenteil mit einem Lagerflansch verbunden ist, insbesondere dessen Lageraufnahme einen Freiraum begrenzt,
wobei der Lagerflansch mit einem Deckelteil verbunden ist, das mit einem Gehäuseteil des Getriebes verbunden ist,
wobei eine Welle über zumindest ein Lager im Gehäuseteil gelagert ist,
wobei mit der Welle ein Mitnehmer drehfest verbunden ist, der eine Außenverzahnung aufweist, die derart mit einer Innenverzahnung eines Bremsbelagträgers im Eingriff ist, dass der Bremsbelagträger mit der Welle drehfest aber axial bewegbar verbunden ist,
wobei zwischen Spulenkern und Bremsbelagträger eine Ankerscheibe angeordnet ist, die drehfest aber axial verschiebbar zum Spulenkern angeordnet ist.

Von Vorteil ist dabei, dass die eintreibende Welle des Getriebes mit der Bremse verbunden ist. Somit muss der zu verbindende, die Welle antreibende Motor nur mit der Welle verbunden werden, ohne als Bremsmotor ausgeführt zu werden. Die Bremse ist also stets am Getriebe vorhanden. Insbesondere ist die Bremse als Haltebremse ausgeführt und somit ist die eintreibende Welle schon bei Montage von der Bremse fixiert. Dadurch ist eine besonders einfache Montage des Motors an das Getriebe ermöglicht.

Bei einer vorteilhaften Ausgestaltung weist der Spulenkern eine ringförmige Ausnehmung auf, in welcher die Spulenwicklung aufgenommen ist. Von Vorteil ist dabei, dass eine einfache Montage ausführbar ist. Außerdem ist der Spulenkern aus eine ferromagnetischen Stahlguss herstellbar.

Bei einer vorteilhaften Ausgestaltung ist das Bremsflächenteil am Lagerflansch zentriert. Von Vorteil ist dabei, dass eine genaue Ausrichtung des Bremsflächenteils in einfacher Weise ermöglicht ist.

Bei einer vorteilhaften Ausgestaltung ist der Lagerflansch am Deckelteil zentriert und das Deckelteil am Gehäuseteil. Von Vorteil ist dabei, dass eine präzise Montage ausführbar ist.

Bei einer vorteilhaften Ausgestaltung ist die Ankerscheibe von einem Federelement mit Federkraft beaufschlagt, welches am Spulenkern abgestützt ist. Von Vorteil ist dabei, dass bei Nichtbestromung die Bremse einfällt und somit als Haltebremse ausgeführt ist.

**Erfindungsgemäß** nimmt das Deckelteil einen Wellendichtring auf, welcher auf der Welle läuft. Von Vorteil ist dabei, dass das Getriebeinnere mit Schmieröl befüllbar ist und zur Umgebung und Bremse hin abgedichtet ist.

Bei einer vorteilhaften Ausgestaltung ist ein die Bremse, insbesondere den Spulenkern, die Ankerscheibe und den Bremsbelagträger, umgebendes Haubenteil mit dem Lagerflansch schraubverbunden. Von Vorteil ist dabei, dass ein Berührschutz vorgesehen ist und der Lagerflansch das Haubenteil hält und trägt.

Bei einer vorteilhaften Ausgestaltung ist am Lagerflansch eine Kabeldurchführung für die elektrischen Leitungen zur Versorgung der Spulenwicklung angeordnet. Von Vorteil ist dabei, dass ein geschütztes Herausführen der Leitungen ausführbar ist.

Bei einer vorteilhaften Ausgestaltung weist das Haubenteil eine Ausnehmung auf zur Durchführung der elektrischen Leitungen durch die Wandung des Haubenteils. Von Vorteil ist dabei, dass die Versorgungsleitungen der Bremse durch das Haubenteil herausführbar sind.

Bei einer vorteilhaften Ausgestaltung ragt die Welle beidseitig aus dem Gehäuseteil heraus,

insbesondere wobei am ersten Ende der Welle ein Elektromotor zur Drehmomenteinleitung vorsehbar ist und am anderen Ende die Bremse angeordnet ist. Von Vorteil ist dabei, dass die Bremse mit dem Getriebe verbunden ist und somit bei Verbinden des antreibenden Elektromotors mit dem Getriebe, also Verbinden der Rotorwelle des Elektromotors mit der eintreibenden Welle des Getriebes und Verbinden des Gehäuses des Elektromotors mit dem Gehäuse, insbesondere Gehäuseteil, des Getriebes, die Bremse die eintreibende Welle fixiert, da die Bremse als Haltebremse ausgeführt ist.

Bei einer vorteilhaften Ausgestaltung weist das Deckelteil eine axial gerichtete Vertiefung auf, in welche der Lagerflansch teilweise hineinragt,
insbesondere wobei der von der Vertiefung überdeckte axiale Bereich überlappt mit dem von dem Lagerflansch überdeckten axialen Bereich,
insbesondere wobei im von der Vertiefung überdeckten Radialabstandsbereich zwischen Lagerflansch und Deckelteil ein nicht verschwindender Abstand vorhanden ist. Von Vorteil ist dabei, dass der Bereich der Lageraufnahme des Lagerflansches in den Bereich der Vertiefung hineinragt. Somit überlappt der von der Vertiefung überdeckte axiale Bereich mit dem von der Lageraufnahme überdeckten axialen Bereich. Auf diese Weise ist eine sehr kompakte Ausführung ermöglicht.

Die Lageraufnahme ist dabei zur Aufnahme eines Wälzlagers, insbesondere Kugellagers, also eines Außenrings des Wälzlagers, geeignet.

Die Erfindung wird nun anhand von Abbildungen näher erläutert:

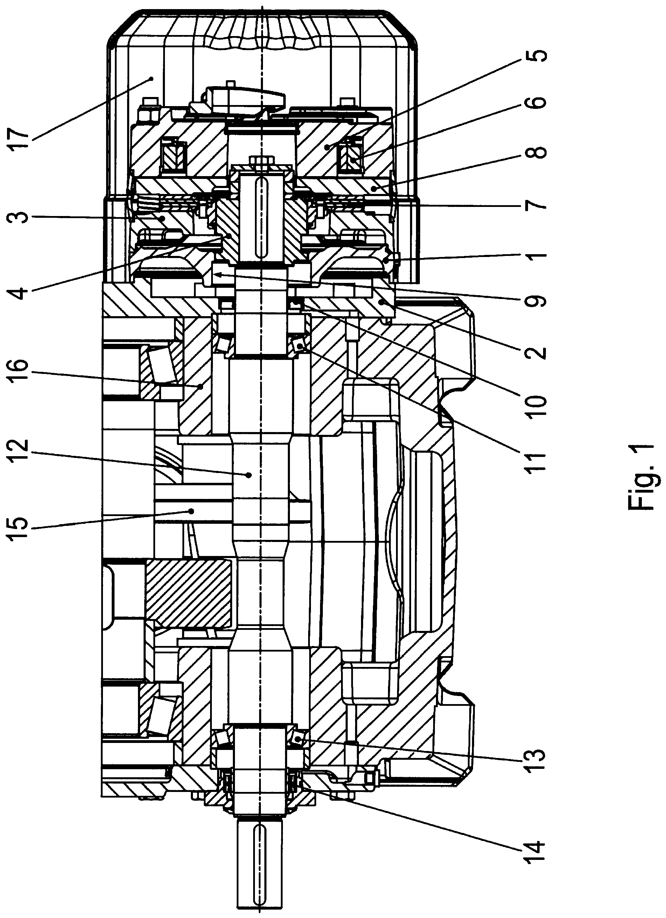

In der Figur 1 ist eine Schnittansicht durch ein erfindungsgemäßes Getriebe mit elektromagnetisch betätigbarer Bremse dargestellt.

Wie in der Figur 1 gezeigt, weist das Getriebe eine eintreibende Welle 12 auf, mit der ein Verzahnungsteil 15 drehfest verbunden ist, welches im Eingriff steht mit einem weiteren Verzahnungsteil, das mit einer anderen Welle des Getriebes drehfest verbunden ist.

Die Welle ist über Lager 13 und 11 in einem Gehäuseteil 16 gelagert. Axial außerhalb der Lager 13 und 11 sind Wellendichtringe 14 und 10 angeordnet, so dass das mit Schmieröl befüllte Getriebeinnere gegen die äußere Umgebung abgedichtet ist.

Die Welle 12 tritt durch eine Ausnehmung im Gehäuseteil 16 zur Bremse hin heraus. Dieser Austrittsbereich ist von einem Deckelteil 2 umgeben, das mittels Passring zentriert ist am Gehäuseteil 16 und eine Ausnehmung aufweist, in welcher der Wellendichtring 10 angeordnet ist. Der Wellendichtring 10 ist dabei im Deckelteil 2 aufgenommen und läuft auf der Welle 12.

Mittels Passfederverbindung ist ein Mitnehmer 4 mit der Welle 12 drehfest verbunden. Der Mitnehmer 4 weist an seiner radialen Außenseite eine Verzahnung auf, die in axialer Richtung sich erstreckt. Mit dieser Verzahnung ist eine Innenverzahnung des Bremsbelagträgers 7 im Eingriff, so dass der Bremsbelagträger drehfest aber axial verschiebbar mit der Welle 12 verbunden ist.

Mit dem Deckelteil 2 ist ein Lagerflansch 1 verbunden, der allerdings kein Lager aufnimmt, sondern eine freie Lageraufnahme 9 aufweist. Zwischen Lagerflansch 1 und Welle 12 ist also im von dieser Lageraufnahme 9 überdeckten axialen Bereich ein Freiraum.

Mit dem Lagerflansch 1 ist ein Bremsflächenteil 3 verbunden, so dass der Lagerflansch 1 zwischen dem Bremsflächenteil 3 und dem Deckelteil 2 angeordnet ist.

Das Bremsflächenteil 3 weist eine zum Bremsbelagträger 7 hin gewandte Bremsfläche auf. Auf der von dem Bremsbelagträger 7 abgewandten Seite ist eine Ankerscheibe 8 angeordnet, die drehfest aber axial bewegbar mit einem Spulenkern 5 verbunden ist, welcher drehfest mit dem Bremsflächenteil 3 und somit auch mit dem Deckelteil 1 und dem Lagerflansch 1 sowie mit dem Gehäuseteil 16 verbunden ist.

Dabei sind axial gerichtete Bolzen mit dem Spulenkern 5 verbunden, welche auch mit dem Bremsflächenteil 3 verbunden sind. Diese Bolzen gehen durch Ausnehmungen der Ankerscheibe 8 hindurch und wirken somit als axiale Führung.

Im Spulenkern 5 ist eine ringförmige Ausnehmung angeordnet, wobei die Ringachse koaxial zur Achse der Welle 12 ausgerichtet ist. In der ringförmigen Ausnehmung ist eine Spulenwicklung 6 aufgenommen.

Bei Bestromung der Spulenwicklung 6 wird die Ankerscheibe 8 zum Spulenkern 5 hin angezogen entgegen der von Federelementen erzeugten Federkraft, wobei die Federelemente abgestützt sind an dem Spulenkern 5. Somit wird die Bremse gelüftet.

Bei Nichtbestromung der Spulenwicklung 6 drücke die Federelemente die Ankerschiebe 8 auf den Bremsbelagträger 7, welcher somit auf die am Bremsflächenteil ausgebildete Bremsfläche gedrückt wird. Da der Bremsbelagträger axial beidseitig Bremsbeläge aufweist, wird daher eine Reibkraft bewirkt und die somit eingefallene Bremse bremst die Welle 12 ab.

Der Lagerflansch 1 weist einen Zentrierbund auf, mit welchem er am Deckelteil 2 zentriert ist. Das Bremsflächenteil 3 ist ebenso am Lagerflansch 1 zentriert.

Auf den Lagerflansch 1 ist ein Haubenteil 17 aufgeschoben, also übergestülpt. Das Haubenteil 17 ist am Lagerflansch 1 angeschraubt.

Der Lagerflansch 1 ist bei einem Elektromotor verwendbar, wobei dort dann an der Lageraufnahme 9 ein Lager aufnehmbar ist zur Lagerung der Motorwelle.

Das Deckelteil 2 weist eine Vertiefung auf, in welche der Lagerflansch 1 zumindest teilweise hineinragt. Der von der Vertiefung überdeckte axiale Bereich überlappt also mit dem vom Lagerflansch 1 überdeckten axialen Bereich.

Im Lagerflansch 1 ist außerdem eine Kabeldurchführung für die Zuleitungen der Spulenwicklung 6 vorgesehen. Dabei werden die Zuleitungen zur Spulenwicklung 6 mittels der Kabeldurchführung durch den Lagerflansch 1 geführt und von dort durch eine Ausnehmung im Haubenteil 17 heraus in die Umgebung.
Bei einem weiteren erfindungsgemäßen Ausführungsbeispiel ist

Die Welle 12 ist beidseitig aus dem Gehäuseteil 12 herausragend angeordnet. Somit ist ein antreibender Elektromotor auf der von der Bremse abgewandten Seite des Gehäuseteils anordenbar. Es muss also kein Bremsmotor verwendet werden, wobei allerdings die eintreibende Welle des Getriebes beidseitig herausgeführt werden muss.

### Bezugszeichenliste

1 Lagerflansch
2 Deckelteil
3 Bremsflächenteil
4 Mitnehmer
5 Spulenkern
6 Spulenwicklung
7 Bremsbelagträger
8 Ankerscheibe
9 Lageraufnahme
10 Wellendichtring
11 Lager
12 Welle, insbesondere eintreibende Welle
13 Lager
14 Wellendichtring
15 Zahnrad
16 Gehäuseteil
17 Haubenteil

## Patentansprüche

1. Getriebesystem, aufweisend ein Getriebe und eine elektromagnetisch betätigbare Bremse,
wobei die Bremse einen Spulenkern (5) aufweist, der mit einem Bremsflächenteil (3) drehfest verbunden ist,
wobei eine Welle über zumindest ein Lager (11) in einem Gehäuseteil (16) des Getriebes gelagert ist,
wobei mit der Welle ein Mitnehmer (4) drehfest verbunden ist, der eine Außenverzahnung aufweist, die derart mit einer Innenverzahnung eines Bremsbelagträgers (7) im Eingriff ist, dass der Bremsbelagträger (7) mit der Welle drehfest aber axial bewegbar verbunden ist,
wobei das Bremsflächenteil (3) eine zum Bremsbelagträger (7) hin gewandte Bremsfläche aufweist, wobei zwischen Spulenkern (5) und Bremsbelagträger (7) eine Ankerscheibe (8) angeordnet ist, die drehfest aber axial verschiebbar zum Spulenkern (5) angeordnet ist,
**wobei** das Bremsflächenteil (3) mit einem Lagerflansch (1) verbunden ist, insbesondere dessen Lageraufnahme (9) einen Freiraum begrenzt, wobei das Bremsflächenteil (3) am Lagerflansch (1) zentriert ist,
**dadurch gekennzeichnet, dass** der Lagerflansch (1) mit einem Deckelteil (2) verbunden ist, das mit dem Gehäuseteil (16) verbunden ist,
**wobei das Deckelteil (2) einen Wellendichtring (10) aufnimmt, welcher auf der Welle läuft,**
**wobei der Lagerflansch (1) am Deckelteil (2) zentriert ist und**
**wobei das Deckelteil (2) am Gehäuseteil (16) zentriert ist.**

2. Getriebesystem nach Anspruch 1,
**dadurch gekennzeichnet, dass**
der Spulenkern (5) eine ringförmige Ausnehmung aufweist, in welcher die Spulenwicklung (6) aufgenommen ist.

3. Getriebesystem nach mindestens einem der vorangegangenen Ansprüche,
**dadurch gekennzeichnet, dass**
die Ankerscheibe (8) von einem Federelement mit Federkraft beaufschlagt ist, welches am Spulenkern (5) abgestützt ist.

4. Getriebesystem nach mindestens einem der vorangegangenen Ansprüche,
**dadurch gekennzeichnet, dass**
ein die Bremse, insbesondere den Spulenkern (5), die Ankerscheibe (8) und den Bremsbelagträger (7), umgebendes Haubenteil mit dem Lagerflansch (1) schraubverbunden ist.

5. Getriebesystem nach mindestens einem der vorangegangenen Ansprüche,
**dadurch gekennzeichnet, dass**
am Lagerflansch (1) eine Kabeldurchführung für die elektrischen Leitungen zur Versorgung der Spulenwicklung (6) angeordnet ist.

6. Getriebesystem nach mindestens einem der vorangegangenen Ansprüche,
**dadurch gekennzeichnet, dass**
das Haubenteil eine Ausnehmung aufweist zur Durchführung der elektrischen Leitungen durch die Wandung des Haubenteils.

7. Getriebesystem nach mindestens einem der vorangegangenen Ansprüche,
**dadurch gekennzeichnet, dass**
die Welle beidseitig aus dem Gehäuseteil (16) herausragt,
insbesondere wobei am ersten Ende der Welle ein Elektromotor zur Drehmomenteinleitung vorsehbar ist und am anderen Ende die Bremse angeordnet ist.

8. Getriebesystem nach mindestens einem der vorangegangenen Ansprüche,
**dadurch gekennzeichnet, dass**
das Deckelteil (2) eine axial gerichtete Vertiefung aufweist, in welche der Lagerflansch (1) teilweise hineinragt,
insbesondere wobei der von der Vertiefung überdeckte axiale Bereich überlappt mit dem von dem Lagerflansch (1) überdeckten axialen Bereich,
insbesondere wobei im von der Vertiefung überdeckten Radialabstandsbereich zwischen Lagerflansch (1) und Deckelteil (2) ein nicht verschwindender Abstand vorhanden ist.

9. Getriebesystem nach mindestens einem der vorangegangenen Ansprüche,
**dadurch gekennzeichnet, dass**
der von einer oder der Vertiefung im Deckelteil (2) überdeckte axiale Bereich mit dem von der am Lagerflansch (1) ausgebildeten Lageraufnahme (9) überdeckten axialen Bereich überlappt.

## Claims

1. Gearing system having a gearing and an electromagnetically operable brake,
the brake having a coil core (5) connected to a braking surface part (3) for conjoint rotation, a shaft being mounted in a housing part (16) of the gearing by means of at least one bearing (11),
a catch (4) being connected to the shaft for conjoint rotation and having outer teeth that engage with inner teeth of a brake lining carrier (7) such that the brake lining carrier (7) is connected to the shaft in a rotationally fixed but axially movable manner,
the braking surface part (3) having a braking surface facing the brake lining carrier (7),
an armature disc (8) being arranged between the coil core (5) and the brake lining carrier (7) and arranged in a rotationally fixed but axially displaceable manner with respect to the coil core (5),
the braking surface part (3) being connected to a bearing flange (1), the bearing seat (9) of which in particular defines a clearance,
the braking surface part (3) being centred on the bearing flange (1),
**characterised in that**
the bearing flange (1) is connected to a cover part (2) that is connected to the housing part (16),
the cover part (2) receiving a shaft seal ring (10) that runs on the shaft,
the bearing flange (1) being centred on the cover part (2) and
the cover part (2) being centred on the housing part (16).

2. Gearing system according to claim 1,
**characterised in that**
the coil core (5) has an annular recess in which the coil winding (6) is received.

3. Gearing system according to at least one of the preceding claims,
**characterised in that**
spring force is applied to the armature disc (8) by a resilient element supported against the coil core (5).

4. Gearing system according to at least one of the preceding claims,
**characterised in that**
a hood part that surrounds the brake, in particular the coil core (5), the armature disc (8) and the brake lining carrier (7), is screwed to the bearing flange (1).

5. Gearing system according to at least one of the preceding claims,
**characterised in that**
a cable bushing for the electrical lines supplying power to the coil winding (6) is arranged on the bearing flange (1).

6. Gearing system according to at least one of the preceding claims,
**characterised in that**
the hood part has a recess for guiding the electrical lines through the wall of the hood part.

7. Gearing system according to at least one of the preceding claims,
**characterised in that**
the shaft protrudes out of both sides of the housing part (16),
an electric motor for introducing torque in particular being able to be provided on the first end of the shaft, and the brake being arranged on the other end.

8. Gearing system according to at least one of the preceding claims,
**characterised in that**
the cover part (2) has an axially oriented groove into which the bearing flange (1) protrudes in part,
the axial region covered by the groove in particular overlapping the axial region covered by the bearing flange (1),
a non-negligible gap in particular being present in the radial gap region, covered by the groove, between the bearing flange (1) and the cover part (2).

9. Gearing system according to at least one of the preceding claims,
**characterised in that**
the axial region covered by a or the groove in the cover part (2) overlaps the axial region covered by the bearing seat (9) formed on the bearing flange (1).

## Revendications

1. Système de transmission, présentant une transmission et un frein à actionnement électromagnétique,
sachant que le frein présente un noyau de bobine (5), qui est relié en solidarité de rotation à un élément formant surface de freinage (3),
sachant qu'un arbre est monté par l'intermédiaire d'au moins un palier (11) dans un élément formant boîtier (16) de la transmission,
sachant qu'un entraîneur (4) est relié en solidarité de rotation à l'arbre, entraîneur qui présente une denture extérieure qui est en prise avec une denture intérieure d'un support de garniture de frein (7) de telle sorte que le support de garniture de frein (7) est relié à l'arbre en solidarité de rotation mais à mobilité axiale,
sachant que l'élément formant surface de freinage (3) présente une surface de freinage tournée vers le support de garniture de frein (7),
sachant qu'un disque d'induit (8) est disposé entre le noyau de bobine (5) et le support de garniture de frein (7), disque qui est disposé en solidarité de rotation mais à translation axiale par rapport au noyau de bobine (5),
sachant que l'élément formant surface de freinage (3) est relié à une bride de palier (1), en particulier dont le logement de palier (9) délimite un espace libre,
sachant que l'élément formant surface de freinage (3) est centré sur la bride de palier (1), **caractérisé en ce que** la bride de palier (1) est reliée à un élément formant couvercle (2), qui est relié à l'élément formant boîtier (16),
sachant que l'élément formant couvercle (2) reçoit une bague d'étanchéité d'arbre (10) qui tourne sur l'arbre,
sachant que la bride de palier (1) est centrée sur l'élément formant couvercle (2) et sachant que l'élément formant couvercle (2) est centré sur l'élément formant boîtier (16).

2. Système de transmission selon la revendication 1, **caractérisé en ce que** le noyau de bobine (5) présente un évidement annulaire dans lequel est reçu le bobinage (6).

3. Système de transmission selon au moins une des revendications précédentes, **caractérisé en ce que** le disque d'induit (8) est sollicité avec une force de ressort par un élément formant ressort qui est soutenu sur le noyau de bobine (5).

4. Système de transmission selon au moins une des revendications précédentes, **caractérisé en ce qu'**un élément formant capot, entourant en particulier le noyau de bobine (5), le disque d'induit (8) et le support de garniture de frein (7), est assemblé par vis à la bride de palier (1).

5. Système de transmission selon au moins une des revendications précédentes, **caractérisé en ce qu'**un passage de câbles pour les lignes électriques destinées à alimenter le bobinage (6) est disposé sur la bride de palier (1).

6. Système de transmission selon au moins une des revendications précédentes, **caractérisé en ce que** l'élément formant capot présente un évidement pour faire passer les lignes électriques à travers la paroi de l'élément formant capot.

7. Système de transmission selon au moins une des revendications précédentes, **caractérisé en ce que** l'arbre dépasse de part et d'autre hors de l'élément formant boîtier (16),
sachant en particulier qu'un moteur électrique peut être prévu à la première extrémité de l'arbre pour introduire un couple de rotation et que le frein est disposé à l'autre extrémité.

8. Système de transmission selon au moins une des revendications précédentes, **caractérisé en ce que** l'élément formant couvercle (2) présente un renfoncement orienté axialement dans lequel s'enfonce partiellement la bride de palier (1),
sachant en particulier que la région axiale couverte par le renfoncement chevauche la région axiale couverte par la bride de palier (1),
sachant en particulier qu'une distance non infime est présente entre la bride de palier (1) et l'élément formant couvercle (2) dans la région de distance radiale couverte par le renfoncement.

9. Système de transmission selon au moins une des revendications précédentes, **caractérisé en ce que** la région axiale couverte par un ou le renfoncement dans l'élément formant couvercle (2) chevauche la région axiale couverte par le logement de palier (9) formé sur la bride de palier (1).
